# EUROPEAN PATENT APPLICATION

(11) **EP 3 239 889 A1**
(43) Date of publication of application: **01.11.2017**
(21) Application number: 16167294.4
(22) Date of filing: 27.04.2016
(51) Int. Cl.: G06K 7/10, G06Q 20/32

(54) **READING APPARATUS**

(71) Applicant: Toshiba TEC Kabushiki Kaisha, Tokyo 141-0032 (JP)
(72) Inventor: YAJIMA, Shinsuke, Shinagawa-ku, Tokyo 141-8562 (JP)
(74) Representative: Takeuchi, Maya

(57) **Abstract**

According to an embodiment, a reading apparatus includes an image capturing element provided inside a housing. The image capturing element captures, through an image capturing window of the housing, an image of any one of screens including a screen of a first portable terminal and a screen of a second portable terminal having a screen of a lower resolution than the first portable terminal. Further, the reading apparatus includes a first positioning member and a second positioning member. The first positioning member is configured to position the first portable terminal with respect to the image capturing window. The second positioning member positions the second portable terminal with respect to the image capturing window.

## Description

### FIELD

An embodiment described herein generally relate to a reading apparatus.

### BACKGROUND

In the past, in stores such as supermarkets and convenience stores, services are provided to distribute coupons to consumers by e-mails, web pages, and the like. In distributed information, a code symbol obtained by making a service content and identification information thereof into a code (e.g., a bar code and a two dimensional code) may be distributed in some cases. At a checkout counter, a consumer causes the code symbol to be displayed on a portable terminal such as a cell phone and a smartphone and causes the code symbol to be read with a scanner. When the scanner reads the code symbol, a POS (Point Of Sales) system applies the service content included in the code symbol and performs checkout processing.

By the way, the resolution (the number of pixels) of the screen is different between cell phones and smartphones, and in general, a cell phone having a low resolution is preferably scanned upon being brought closer to the image capturing window than a smartphone.

### BRIEF DESCRIPTION OF THE DRAWINGS

Fig. 1 is a perspective view illustrating the entire configuration of a POS system according to an embodiment;
Fig. 2 is a perspective view illustrating a vertical type scanner according to an embodiment when the vertical type scanner is seen from a standing position side of a consumer;
Fig. 3 is a perspective view illustrating an example of a structure of a positioning unit according to an embodiment;
Fig. 4 is a schematic view schematically illustrating a state when a consumer brings a first portable terminal 80 into contact with first positioning members 50a, 50b to fix the position of the first portable terminal 80;
Fig. 5 is a schematic view schematically illustrating a state when a consumer brings a second portable terminal 90 into contact with second positioning members 40a, 40b to fix the position of the second portable terminal 90; and
Fig. 6 is a schematic cross sectional view illustrating a positioning unit according to an embodiment.

### DETAILED DESCRIPTION

According to one embodiment, a reading apparatus includes a housing, an image capturing window, an image capturing element, a first positioning member, and a second positioning member.

The image capturing window is provided in one side surface of the housing.

The image capturing element is provided inside the housing. The image capturing element captures, through the image capturing window, an image of any one of screens including a screen of a first portable terminal and a screen of a second portable terminal having a screen of a lower resolution than the first portable terminal.

The first positioning member includes a support surface supporting the first portable terminal at a position of a first height from the one side surface. The first positioning member positions the first portable terminal with respect to the image capturing window.

The second positioning member includes a support surface supporting the second portable terminal at a position of a second height from the one side surface. The second positioning member positions the second portable terminal with respect to the image capturing window.
Preferably, the first positioning member includes a pair of protruding units protruding by the first height from the one side surfaces at both sides sandwiching the image capturing window.
Preferably, the pair of protruding units have, on the upper surfaces thereof, the support surfaces supporting the first portable terminal.
Preferably, the upper surfaces of the pair of protruding units are substantially flat. Preferably, the pair of protruding units have side surfaces at the image capturing window.
Preferably, the side surfaces of the protruding units include inclined surfaces that extend and descend from the upper surface side of the protruding unit to the image capturing window side and that face each other over the image capturing window. Preferably, the second positioning member has, on the inclined surface, the support surface supporting the second portable terminal.
Preferably, the first positioning member includes a cushion member provided on the support surface.
The present invention further relates to a reading apparatus comprising: a housing; a first image capturing window provided in a first side surface of the housing; a first image capturing element configured to capture an image of a merchandize through the first image capturing window; a second image capturing window provided in a second side surface of the housing that is different from the first side surface of the housing; a second image capturing element provided inside the housing, and configured to capture, through the second image capturing window, an image of any one of screens including a screen of a first portable terminal and a screen of a second portable terminal having a screen of a lower resolution than the first portable terminal; a first positioning member including a support surface supporting the first portable terminal at a position of a first height from the second side surface, and configured to position the first portable terminal with respect to the second image capturing window; a second positioning member including a support surface supporting the second portable terminal at a position of a second height closer to the second image capturing window from the second side surface, and configured to position the second portable terminal with respect to the second image capturing window.
Preferably, the first positioning member includes a pair of protruding units protruding by the first height from the second side surfaces at both sides sandwiching the second image capturing window.
Preferably, the pair of protruding units have, on the upper surfaces thereof, the support surfaces supporting the first portable terminal.
Preferably, the upper surfaces of the pair of protruding units are flat.
Preferably, the pair of protruding units have side surfaces at the second image capturing window.
Preferably, the side surfaces of the protruding units include inclined surfaces that extend and descend from the upper surface side of the protruding unit to the second image capturing window side and that face each other over the second image capturing window.
Preferably, the second positioning member has, on the inclined surface, the support surface supporting the second portable terminal.
Preferably, the first positioning member includes a cushion member provided on the support surface.
Preferably, the housing is formed in a substantially rectangular parallelepiped shape in which the long side extends in the height direction.
Preferably, the first image capturing window is provided on a lateral surface of the housing.
Preferably, wherein the second image capturing window is provided on a top surface of the housing.
Preferably, the top surface is inclined toward the side opposite said lateral surface on which the image capturing window is provided.

Hereinafter, further, an embodiment will be explained, as non-limiting examples, with reference to drawings. In the drawings, the same reference numerals denote the same or similar portions.

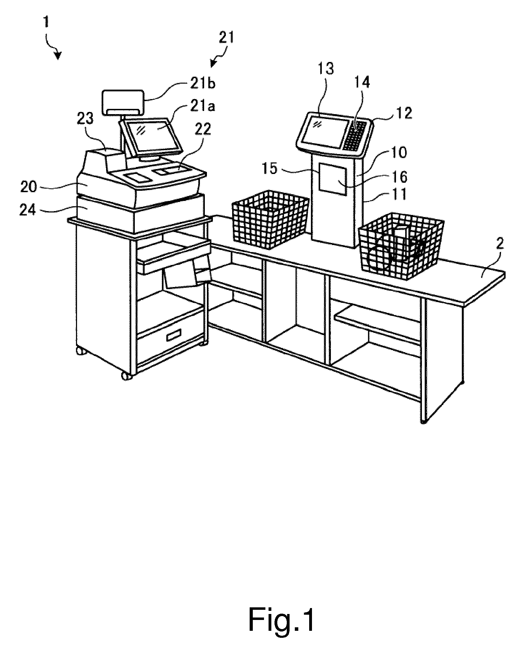

Fig. 1 is a perspective view illustrating the entire configuration of a POS system 1 according to an embodiment. As shown in Fig. 1, the POS (Point Of Sales) system 1 which is a store system mainly includes a vertical type scanner 10 and a POS terminal 20. The POS terminal 20 is a merchandize sales data processing device that executes sales registration processing in accordance with images captured by the vertical type scanner 10. The vertical type scanner 10 is vertically provided, on a sacker table 2 on which a shopping basket and the like is placed, at a position where an operator (for example, a clerk of the store) and a consumer substantially face each other (substantially central position). The POS terminal 20 is arranged at around one of the end portions of the sacker table 2. The vertical type scanner 10 and the POS terminal 20 are connected to be able to communicate with each other via a transmission path, not shown.

The POS terminal 20 executes, e.g., sales registration processing including checkout processing based on various kinds of data of merchandizes purchased by the consumer. The POS terminal 20 is provided above a drawer 24 that accommodates coins and bills so that the coins and bills can be taken out and put in. The POS terminal 20 includes two display devices 21, an input device 22, and a receipt printer 23. The input device 22 includes a keyboard and a key. A display device 21a for the operator, which is provided at the same side as the input device 22, and a display device 21b for the consumer, which allows the direction of the screen to be changed with the rotation of a holding shaft, are provided as the display devices 21. The display device 21 and the input device 22 constitute a user interface having an information input function for input from the user and an information output function for output to the user.

As shown in Fig. 1, the vertical type scanner 10 includes a main body unit 11 (housing) and an operation panel 12. The main body unit 11 is formed in a substantially rectangular parallelepiped shape having its long side in the height direction, and is vertically attached to the sacker table 2. For example, the height of the main body unit 11 is on the sacker table 2 and is preferably about the height of the eyes of the operator.

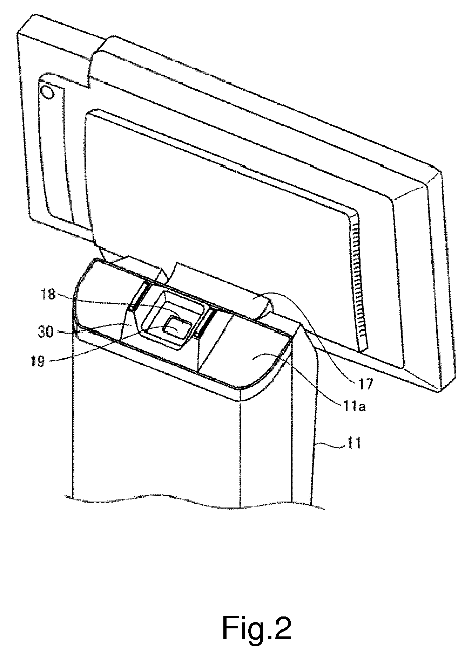

An operation panel 12 is attached to the upper end of the main body unit 11 with a hinge 17 (see Fig. 2). The operation panel 12 is provided so that the rotation angle with respect to the main body unit 11 can be changed according to how much the hinge 17 is opened.

The display screen of the first display unit 13 and the operation surface of the keyboard 14 are provided side by side on the operation panel 12. The first display unit 13 is a display device for an operator, and is a display device attached with a touch panel constituted by a display device such as an LCD (Liquid Crystal Display). The keyboard 14 includes various kinds of keys (category keys, merchandize keys) for registering merchandizes from merchandize categories, and numeric keys used to directly input a merchandize code and to input a number. Although Fig. 1 shows an example where the first display unit 13 and the keyboard 14 are integrally provided on the operation panel 12, the first display unit 13 and the keyboard 14 may be provided separately.

In this case, the operation surface of the keyboard 14 and the display screen of the first display unit 13 are provided to face the standing position side of the operator of the POS system 1. More specifically, in other words, the standing position side of the operator is a side of the main body unit 11 toward which the display screen of the first display unit 13 and the operation surface of the keyboard 14 are directed. The standing position side of the consumer is a side of the main body unit 11 opposite to the side toward which the display screen of the first display unit 13 and the operation surface of the keyboard 14 are directed.

A first image capturing window 15 is provided in the main body unit 11 at the standing position side of the operator. A first image capturing unit 16 is provided inside the main body unit 11 and the inner side of the first image capturing window 15. The first image capturing unit 16 is an image sensor having an image capturing element such as a CCD (Charge Coupled Device) and a CMOS (Complementary MOS).

The first image capturing unit 16 reads a merchandize (performs image capturing process). The operator holds a merchandize to be scanned through the first image capturing window 15. The first image capturing unit 16 captures an image of the merchandize through the first image capturing window 15. The first image capturing unit 16 optically captures images of a code symbol attached to a merchandize held at the first image capturing window 15 (e.g., a bar code and a two dimensional code) and the entire merchandize or a part of the merchandize (object).

The vertical type scanner 10 outputs the image captured by the first image capturing unit 16 to the POS terminal 20. The images captured by the first image capturing unit 16 include a captured image of a code symbol attached to a merchandize, an object image obtained by capturing an image of the entire merchandize or a part of the merchandize, and the like.

A control unit (not shown) of the POS terminal 20 identifies, from a merchandize master file, the merchandize according to the image on the basis of the image received from the vertical type scanner 10, and performs sales registration of the identified merchandize. More specifically, when the captured image includes an image of a code symbol, the POS terminal 20 reads merchandize information corresponding to the code symbol from the merchandize master file, and registers it as the merchandize information about the sold merchandize. When the captured image is an object image, the POS terminal 20 identifies the merchandize by performing the object recognition processing, and reads the merchandize information about the identified merchandize from the merchandize master file, and performs the sales registration.

It should be noted that the object recognition is a technique for identifying (recognizes) an item from a feature quantity obtained from the external appearance of the item (object) captured by the first image capturing unit 16. The POS terminal 20 extracts, as a feature quantity, a feature in terms of external appearance of the merchandize, which is the subject, from the captured image (object image) captured by the first image capturing unit 16. Then, the POS terminal 20 compares the extracted feature quantity with the feature quantity (collation data) of a reference merchandize prepared in advance, and identifies (recognizes) the merchandize which is the subject. The feature in terms of external appearance of the merchandize includes the shape, the color, the unevenness of the surface, and the like.

The first display unit 13 displays, for the operator, the name of the merchandize, the price, and the like, which have been registered, in accordance with the sales registration processing with the POS terminal 20. It should be noted that the first display unit 13 may display the captured image captured by the first image capturing unit 16, the name of the merchandize identified through object recognition, an illustration of the merchandize, the name of the merchandize candidate, an illustration of a merchandize candidate, and the like.

Fig. 2 is a perspective view of the vertical type scanner 10 when the vertical type scanner 10 is seen from the standing position side of the consumer. As shown in Fig. 2, on the upper surface 11a of the main body unit 11, the operation panel 12 is provided with the hinge 17 in a rotatable manner at the end portion of the standing position side of the operator. The upper surface (top surface) 11a of the main body unit 11 is an inclined surface that extends and descends from the standing position side of the operator to the standing position side of the consumer. A second image capturing window 18 is provided on the upper surface 11a that is inclined toward the consumer side. A second image capturing unit 19 is provided inside the main body unit 11 and the inner side of the second image capturing window 18. The second image capturing unit 19 is an image sensor having an image capturing element such as a CCD, a CMOS.

The second image capturing unit 19 reads the coupon screen showing coupon information or a coupon code (captures an image). The coupon screen may use a text showing a content of discount service and the like, or color illustration and the like. The coupon code may use a code symbol such as a bar code or a two dimensional code, or may use text indication of a code number.

The consumer holds the screen of the portable terminal such as a cell phone or a smartphone to be scanned through the second image capturing window 18. The second image capturing unit 19 captures the screen of the portable terminal through the second image capturing window 18. The second image capturing unit 19 optically captures the coupon screen displayed on the screen of the portable terminal held at the second image capturing window 18.

The vertical type scanner 10 outputs the image captured by the second image capturing unit 19 to the POS terminal 20. A control unit (not shown) of the POS terminal 20 identifies, from the service master file, a service according to the image on the basis of the image received from the vertical type scanner 10. Then, the POS terminal 20 applies the identified service to the sales registration processing of the owner (consumer) of the portable terminal. The service content is not particularly limited, and may be a service such as discount, or may be a service such as a higher ratio for reward points to be added. The first display unit 13 displays a registered service content to the operator in accordance with service application processing with the POS terminal 20. The display device 21a and the display device 21b also displays the registered service content to the operator or the consumer.

Subsequently, a positioning unit 30 of the portable terminal will be explained. As shown in Fig. 2, on the upper surface 11a of the main body unit 11, the positioning unit 30 is provided to help the positioning of the portable terminal in such a manner as to surround the periphery of the second image capturing window 18. The positioning unit 30 maintains the distance between two kinds of portable terminals, of which resolutions are different, and the second image capturing window 18 at a distance according to the resolution of each of them. As the two types of portable terminals, a smartphone and the like is applied to the first portable terminal, and a cell phone and the like is applied to the second portable terminal.

It should be noted that examples of applications of the first and the second portable terminals are not limited thereto. The first portable terminal may be an electronic device other than smartphones as long as the first portable terminal is a portable type electronic device having a screen of a higher resolution than the second portable terminal, i.e., having a higher number of pixels. As other examples, electronic devices such as a tablet terminal, a PDA (Personal Digital Assistance) device, and the like may be applied to the first portable terminal. The second portable terminal may be a clamshell type cell phone, a candy bar type cell phone, or a slide type cell phone. A PHS (Personal Handy-phone System) and the like may be used as the second portable terminal.

In this case, in a case where the second portable terminal (for example, a cell phone) displays the coupon screen, the screen size is smaller than a case where the first portable terminal (for example, a smartphone) displays the coupon screen. Therefore, in a case where the consumer holds the portable terminal with his hand to be scanned through the second image capturing window 18 as in the past, it is not easy for the consumer to maintain the portable terminal at a distance preferable for reading the screen. With any of the cell phone or the smartphone, it is not easy to maintain the direction of the screen to be a direction preferable for the second image capturing unit 19. Therefore, in the present embodiment, the positioning unit 30 for positioning the first portable terminal and the second portable terminal is provided to surround the periphery of the second image capturing window 18.

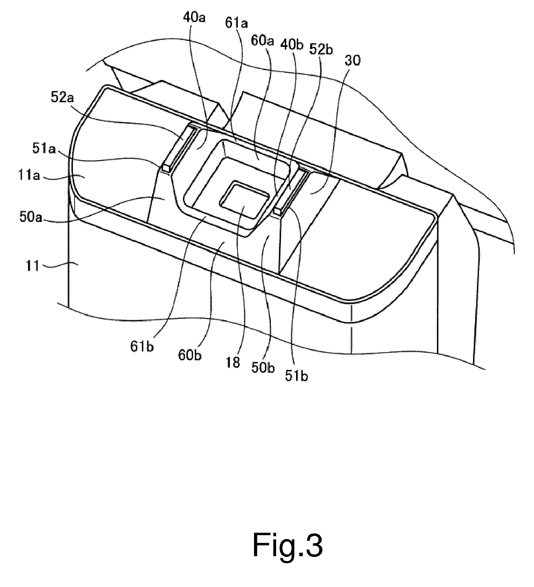

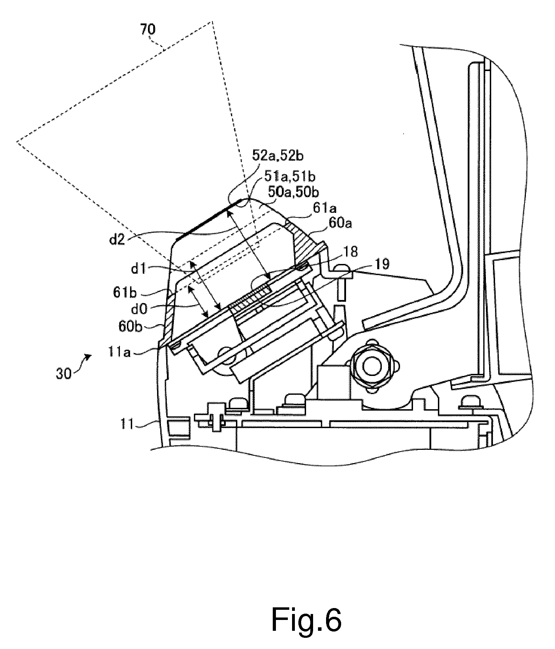

Fig. 3 is a perspective view illustrating an example of a structure of the positioning unit 30. As shown in Fig. 3, the positioning unit 30 includes a first positioning member 50a provided at the left side of the second image capturing window 18 and a first positioning member 50b provided at the right side of the second image capturing window 18. As shown in Fig. 3, the first positioning members 50a, 50b include a pair of protruding units that protrude by a first height d2 (see Fig. 6) from the upper surface 11a at both of the right and the left sides sandwiching the second image capturing unit 19. The protruding units of the first positioning members 50a, 50b are provided to protrude in a mound shape from the upper surface 11a of the main body unit 11, and side surfaces of the both of the right and the left sides of each of the protruding units are inclined surfaces.

On the upper surfaces 51a, 51b of each of the protruding units, the first positioning members 50a, 50b have support surfaces supporting the first portable terminal. In other words, the upper surface 51a of the first positioning member 50a and the upper surface 51b of the first positioning member 50b are support surfaces supporting the first portable terminal.

The upper surface 51a of the first positioning member 50a and he upper surface 51b of the first positioning member 50b are formed at the same height with respect to the upper surface 11a of the main body unit 11 (the first height d2 explained above). The upper surfaces 51a, 51b of the first positioning members 50a, 50b are formed to be flat surfaces, and are parallel surfaces to the upper surface 11a of the main body unit 11. In addition, elastomers 52a, 52b of cushion material are adhered to the upper surfaces 51a, 51b, respectively. It should be noted that the cushion material used for the upper surfaces 51a, 51b is not limited to the elastomer, and other elastic bodies may be used.

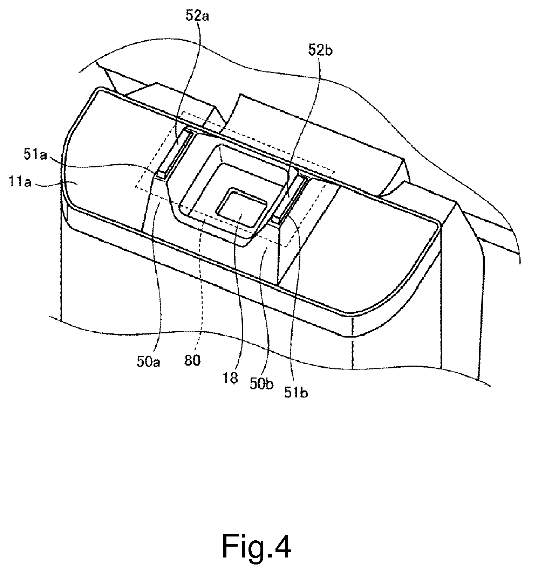

Fig. 4 is a schematic view schematically illustrating a state when the consumer brings the first portable terminal 80 into contact with the first positioning members 50a, 50b to fix the position of the first portable terminal 80. The consumer brings the display screen of the first portable terminal 80 (e.g., a smartphone) to be in a pressurized contact with the elastomers 52a, 52b provided on the first positioning members 50a, 50b while the display screen of the first portable terminal 80 is laid down horizontally, and holds the display screen to be scanned through the second image capturing window 18. Then, the display screen of the first portable terminal 80 is fixed in such a manner that the display screen of the first portable terminal 80 is raised by the height of the protruding units (i.e., the first height d2 that has been explained above) with respect to the second image capturing window 18.

It should be noted that the height of the protruding units that has been explained above (the first height d2 that has been explained above) is the height (distance) from the upper surface 11a, which is provided with the second image capturing window 18, to the elastomers 52a, 52b. In a case where the elastomers 52a, 52b are not provided, the height of the protruding units is the height (distance) from the upper surface 11a, which is provided with the second image capturing window 18, to the upper surfaces 51a, 51b of the first positioning members 50a, 50b. More specifically, the display screen of the first portable terminal is held while a distance equivalent to the height of the protruding units from the second image capturing window 18 is ensured.

The upper surfaces 51a, 51b of the first positioning members 50a, 50b (the support surface that has been explained above) are provided in parallel with the upper surface 11a, which is provided with the second image capturing window 18. Therefore, the display screen of the first portable terminal is held in parallel with the upper surface 11a.

Since the upper surfaces 51a, 51b of the first positioning members 50a, 50b are formed by flat surfaces, this can give a sense of stability in the supporting state of the first portable terminal when the consumer brings the display screen of the first portable terminal into contact with the upper surfaces 51a, 51b of the first positioning members 50a, 50b. In addition, since the upper surfaces 51a, 51b are provided with the elastomers 52a, 52b, respectively, and can prevent the display screen of the portable terminal from being damaged, the consumer can bring the display screen into pressured contact with the first positioning members 50a, 50b while the consumer has a sense of safety.

It should be noted that the spacing distance between the upper surfaces 51a, 51b is a distance based on a general size of the display screen of the first portable terminal. The spacing distance may be such a distance that both ends of the first portable terminal are placed on both of the upper surfaces 51a, 51b even when the display screen of the first portable terminal has a rather small screen size.

As described above, the first positioning members 50a, 50b have the support surface for supporting the first portable terminal (the upper surfaces 51a, 51b of the protruding units) provided at the positon of the first height d2 (see Fig. 6) from the upper surface 11a., and fix the position of the first portable terminal with respect to the second image capturing window 18.

As shown in Fig. 3, the first positioning members 50a, 50b are formed in a mound-shaped protruding shape. The protruding units of the first positioning members 50a, 50b have inner side surfaces. The inner side surfaces of the protruding units include the inclined surfaces that extends and descends from the upper surfaces 51a, 51b of the protruding units to the second image capturing window 18 and that face each other over the second image capturing window 18. The inner side surface is a side surface closer to the second image capturing window 18. On the inclined surfaces, the second positioning members 40a, 40b have the support surfaces supporting the second portable terminal. More specifically, parts of the inner side surfaces facing each other over the second image capturing window 18 function as the second positioning members 40a, 40b that fixes the positon of the second portable terminal. Since the second positioning members 40a, 40b are parts of the inclined surfaces at the inside of the first positioning members 50a, 50b, the height thereof is located at the lower position than the first positioning members 50a, 50b. More specifically, the height of the second positioning members 40a, 40b is provided at the second height d1 (see Fig. 6) closer to the second image capturing window 18 than the upper surfaces 51a, 51b of the first positioning members 50a, 50b.

As described above, the second positioning member 40a, 40b have support surfaces supporting the second portable terminal (inclined surfaces at the inside of the protruding units) at the position of the second height d1 (see Fig. 6) closer to the second image capturing window 18 from the upper surface 11a, and fixes the position of the second portable terminal with respect to the second image capturing window 18.

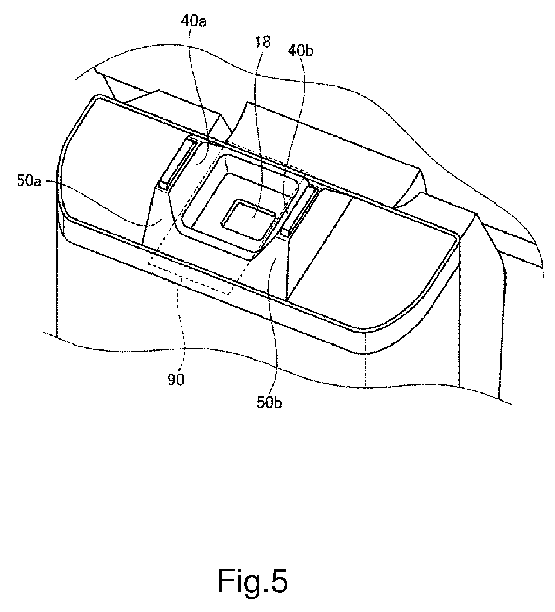

Fig. 5 is a schematic view schematically illustrating a state when the consumer brings the second portable terminal 90 into contact with second positioning members 40a, 40b to fix the position of the second portable terminal 90. The consumer engages the second portable terminal 90 (a cell phone and the like) with the inside of the groove portion sandwiched from both of the right and the left sides by the first positioning members 50a, 50b. As shown in Fig. 5, the second positioning members 40a, 40b are inclined surfaces spreading to the lower side, i.e., spreading as they descend toward the second image capturing window 18. Therefore, the body of the second portable terminal 90 is supported while the body of the second portable terminal 90 is brought into contact with the contour line constituting a part of the slope in accordance with the depth according to the body width of the second portable terminal 90.

Since the first positioning members 50a, 50b are provided to be bilaterally symmetrical manner with respect to the second image capturing window 18, the slopes of the second positioning members 40a, 40b are also bilaterally symmetrical with respect to the second image capturing window 18. Therefore, when the body of the second portable terminal 90 is brought into contact with and supported by parts of the inclined surfaces of the pair of right and left second positioning members 40a, 40b, the display screen of the second portable terminal 90 is automatically supported in parallel with the second image capturing window 18. More specifically, the second positioning members 40a, 40b are provided according to the structure as described above, so that this can prevent the coupon screen from being captured in a distorted manner.

In general, the body widths of the cell phones are different depending on the models, and are not unified. With regard to this issue, in the present embodiment, the inclined surfaces at the side portions of the pair of protruding units of the first positioning members 50a, 50b are used as the second positioning members 40a, 40b. Therefore, even if the body size of the second portable terminal 90 is different, the consumer engages the second portable terminal 90 between the pair of protruding units into the depth according to the body width of the second portable terminal 90, so that the second portable terminal 90 can be held by the second positioning members 40a, 40b.

The slopes of the second positioning members 40a, 40b are provided in a bilaterally symmetrical manner with respect to the central portion of the second image capturing window 18. Therefore, when the second portable terminal 90 is fixed by the second positioning members 40a, 40b, the central position of the display screen in the vertical direction and the central position of the second image capturing window 18 in the vertical direction can be aligned. Therefore, a portion close to the center of the coupon screen is captured, so that the reading efficiency of the screen can be improved.

As shown in Fig. 3, the mound shape protruding units of the first positioning members 50a, 50b are configured such that the bottom portions at the inner side (at the second image capturing window 18) of the mound shape protruding units are coupled with each other. The coupling unit forms the wall portions 60a, 60b surrounding the upper side and the lower side of the second image capturing window 18. The upper surfaces 61a, 61b of the wall portions 60a, 60b are flat surfaces, and are surfaces in parallel with respect to the upper surface 11a of the main body unit 11. It should be noted that the upper surfaces 61a, 61b of the wall portions 60a, 60b are provided at a height still lower, by one step, than the lower end portion of the slopes at the inside of the first positioning members 50a, 50b (i.e., the inclined surfaces forming the second positioning members 40a, 40b).

Basically, the second portable terminal 90 is positioned on the contour line which is a part of the slopes of the second positioning members 40a, 40b. However, in the present embodiment, the wall portions 60a, 60b serving as a guide surface are further provided at the upper side and the lower side of the second image capturing window 18, so that this improves the operational feeling when the consumer fixes the positon of the second portable terminal 90. More specifically, according to the structure, the consumer can be given a feeling of bringing the second portable terminal 90 into pressurized contact with the guide surface (the upper surfaces 61a, 61b of the wall portions 60a, 60b) when the consumer engages the second portable terminal 90 into the groove portion between the second positioning members 40a, 40b.

Even in a case where the consumer drops the second portable terminal 90 slipping out of the consumer's hand into the groove portion, the presence of the wall portions 60a, 60b can prevent the second portable terminal 90 from colliding with the second image capturing window 18 and damaging the second image capturing window 18. Rather than inserting the second portable terminal 90 into the groove portion of the second positioning members 40a, 40b, some consumers may drop one side of the body onto the guide surfaces (upper surfaces 61a, 61b) in advance, and then, rotate the body so that the screen is in such orientation that the screen straightly faces the second image capturing window 18.

Further, since the wall portions 60a, 60b are provided, the light diffracted from around the second image capturing window 18 can be shielded. Therefore, this can prevent outside light from reflecting on the display screen of the first portable terminal 80 or the second portable terminal 90, so that this can prevent the difficulty in reading information from the coupon screen.

In this case, the height from the upper surface 11a of the wall portions 60a, 60b is provided at the height suitable for the distance at which the second image capturing unit 19 can capture images. Hereinafter, an image capturing achievable distance of the second image capturing unit 19 will be explained with reference to Fig. 6.

Fig. 6 is a schematic cross sectional view illustrating the positioning unit 30. The second image capturing unit 19 captures an image in an image capturing area 70 via the second image capturing window 18. A range closer to the second image capturing window 18 than the image capturing area 70 is an image capturing non-achievable area of the second image capturing unit 19. The image capturing non-achievable distance of the second image capturing unit 19 is, for example, about 17 to 18 mm, and when the display screen is brought closer than this distance, a sufficient image quality cannot be obtained.

As shown in Fig. 6, the upper surfaces 61a, 61b of the wall portions 60a, 60b are provided so that a height d0 thereof is equal to or more than the image capturing achievable distance. More specifically, a margin is added to 17 to 18 mm, and the height d0 is configured to be about 20 mm. It should be noted that the height d0 is a height of the upper surfaces 61a, 61b of the wall portions 60a, 60b with respect to the upper surface 11a of the main body unit 11.

As described above, the lower end portion of the slopes forming the second positioning members 40a, 40b (see Fig. 3) is provided at the position higher than the upper surfaces 61a, 61b of the wall portions 60a, 60b. Therefore, basically, the second portable terminal does not come into contact with the upper surfaces 61a, 61b of the wall portions 60a, 60b, and stays within the slopes of the second positioning members 40a, 40b outside thereof. More specifically, as shown in Fig. 6, the second portable terminal can be held at the second height d1 which is larger than the height d0. Therefore, the display screen of the second portable terminal can be positioned while the display screen of the second portable terminal is spaced apart at the distance larger than the image capturing non-achievable distance of the second image capturing window 18.

By the way, the body size of the cell phone can be designed in various manners. Therefore, even if the spacing width between the second positioning members 40a, 40b is sufficiently narrowed in view of the body sizes of the currently available cell phones, a new model having a still narrower width may be put into the market.

With regard to this issue, in the present embodiment, the height of the wall portions 60a, 60b is set as described above. Therefore, even if a new cell phone having a body width that cannot be held by the inclined surfaces of the second positioning members 40a, 40b is put into the market, the positon of the cell phone can be fixed while the cell phone is still in the image capturing achievable range without bringing the cell phone closer and into the image capturing non-achievable range of the second image capturing unit 19.

It should be noted that the first portable terminal is positioned at the first height d2 of the upper surface of the elastomers 52a, 52b pasted to the upper surfaces 51 a, 51b of the first positioning members 50a, 50b. It should be noted that the first height d2 is the height with respect to the upper surface 11a of the main body unit 11. As shown in Fig. 6, the second height d1 is configured to be lower than the first height d2, and accordingly, the display screen of the second portable terminal (a cell phone and the like) is positioned at the position closer to the second image capturing window 18 than the display screen of the first portable terminal (a smartphone and the like). Therefore, the positioning unit 30 can position the display screen of the second portable terminal having the lower screen resolution than the first portable terminal at the position closer than the display screen of the first portable terminal.

Therefore, according to the positioning unit 30 of the present embodiment, even in a case where any one of the portable terminals having different screen resolutions is scanned, the display screen can be easily read, and the image quality of the image captured by the second image capturing unit 19 can be maintained.

In the above explanation, the heights d0, d1, d2 are described as heights with respect to the upper surface 11a of the main body unit 11. This is because the upper surface 11a and the second image capturing window 18 are substantially on the same plane. In the structure in which the upper surface 11a and the second image capturing window 18 are not in substantially the same plane, the heights may be with respect to the second image capturing window 18.

In the above explanation, for example, the first positioning members 50a, 50b are provided at both of the right and the left sides of the second image capturing window 18. Alternatively, the first positioning members 50a, 50b may be provided at both of the upper and the lower ends of the second image capturing window 18. For example, in a case where the size of area of the upper surface 11a of the main body unit 11 is larger, or in a case where the main body unit 11 is not in a rectangular parallelepiped shape, and is such a shape that an inclined surface or a curved surface is formed at the consumer side, the size of area for installing the positioning unit 30 may be increased in some cases. In such case, the first positioning members 50a, 50b can be formed to protruding at both of the upper and the lower ends of the second image capturing window 18. On the contrary, when the first positioning members 50a, 50b are provided at both of the right and the left sides of the second image capturing window 18 as shown in Fig. 3, the vertical size of the positioning unit 30 can be accommodated in a compact size, and even in a case where the depth size of the main body unit 11 (the dimension in the direction from the operator side to the consumer side) is thin, the positioning unit 30 can be provided to be accommodated on the upper surface 11a of the main body unit 11.

As shown in Fig. 3, in a verification test in a case where the first positioning members 50a, 50b are provided at both of the right and the left sides of the second image capturing window 18, most of the consumers bring the smartphones into pressurized contact with the elastomers 52a, 52b while the liquid crystal screen of the smartphone is laid down horizontally. More specifically, it has been verified that the shape as shown in Fig. 3 is such a shape that the consumer can easily, instinctively imagine that the smartphone is brought into contact while the smartphone is laid down horizontally. Most of the smartphones are equipped with a function for automatically rotating the screen display in accordance with the orientation of the screen. Therefore, even if the consumer brings the smartphone into contact with the first positioning members 50a, 50b while the smartphone is laid down horizontally as shown in Fig. 3, the second image capturing unit 19 captures the image of the coupon screen in an appropriate direction.

On the other hand, most of low-spec cell phones are not equipped with automatic rotation function of the screen. With regard to this issue, in the example as shown in Fig. 3, the consumer may bring the cell phone into pressurized contact with the second positioning members 40a, 40b while the liquid crystal screen of the cell phone is held vertically. Therefore, even if the automatic rotation function is not provided, the image of the coupon screen is captured in an appropriate direction.

It should be noted that the screen displayed on the second portable terminal or the first portable terminal is not limited to the coupon screen that has been explained above. For example, the second portable terminal or the first portable terminal may display information such as member registration information on the screen, and the second image capturing unit 19 may read the information from the captured image.

In the above explanation, for example, the positioning unit 30 according to the present embodiment is provided in the vertical type scanner 10, but the target to which the positioning unit 30 is installed is not limited thereto. In another example, a small reading apparatus including the second image capturing window 18, the second image capturing unit 19, and the positioning unit 30 provided integrally may be provided separately from the vertical type scanner 10. In this case, the small reading apparatus is used while the small reading apparatus is connected to the POS terminal 20. The small reading apparatus may also be installed on the sacker table 2.

In another example, the second image capturing window 18, the second image capturing unit 19, and the positioning unit 30 may be incorporated into the POS system integrally having the same function as the POS terminal 20 and the vertical type scanner 10. An example of POS system includes a self-checkout terminal (self-POS) with which the consumer himself or herself scans the merchandizes.

As explained above, in the present embodiment, the first positioning members 50a, 50b for fixing the position of the first portable terminal and the second positioning members 40a, 40b for fixing the position of the second portable terminal are provided so as to sandwich the second image capturing window 18. The second positioning members 40a, 40b are provided at the height lower than the upper surfaces 51a, 51b of the first positioning members 50a, 50b, i.e., the height closer to the second image capturing window 18. With such structure, the screen of the second portable terminal having the low resolution can be positioned at the position closer to the second image capturing window 18 than the screen of the first portable terminal having the high resolution. Therefore, according to the present embodiment, the reading apparatus that can easily read even the display screens of portable terminals having different resolutions can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A reading apparatus comprising:
a housing;
an image capturing window (18) provided on a side surface of the housing;
an image capturing element provided inside the housing, and configured to capture, through the image capturing window, an image of any one of screens including a screen of a first portable terminal and a screen of a second portable terminal having a screen of a lower resolution than the first portable terminal;
a first positioning member (50a, 50b) including a support surface supporting the first portable terminal at a position of a first height from the one side surface, and configured to position the first portable terminal with respect to the image capturing window;
a second positioning member (40a, 40b)including a support surface supporting the second portable terminal at a position of a second height closer to the image capturing window from the one side surface, and configured to position the second portable terminal with respect to the image capturing window.

2. The reading apparatus according to claim 1, wherein the first positioning member includes a pair of protruding units protruding by the first height from the one side surfaces at both sides sandwiching the image capturing window, and
the pair of protruding units have, on the upper surfaces thereof, the support surfaces (51 a, 51 a) supporting the first portable terminal.

3. The reading apparatus according to claim 2, wherein the upper surfaces of the pair of protruding units are substantially flat.

4. The reading apparatus according to claim 2 or 3, wherein the pair of protruding units have side surfaces at the image capturing window,
the side surfaces of the protruding units include inclined surfaces that extend and descend from the upper surface side of the protruding unit to the image capturing window side and that face each other over the image capturing window, and
the second positioning member has, on the inclined surface, the support surface (61a, 61b) supporting the second portable terminal.

5. The reading apparatus according to claim 2, wherein the first positioning member includes a cushion member provided on the support surface.

6. A reading apparatus comprising:
a housing(11);
a first image capturing window (15) provided in a first side surface of the housing;
a first image capturing element configured to capture an image of a merchandize through the first image capturing window;
a second image capturing window (18) provided in a second side surface of the housing that is different from the first side surface of the housing;
a second image capturing element provided inside the housing, and configured to capture, through the second image capturing window, an image of any one of screens including a screen of a first portable terminal and a screen of a second portable terminal having a screen of a lower resolution than the first portable terminal;
a first positioning member including a support surface supporting the first portable terminal at a position of a first height from the second side surface, and configured to position the first portable terminal with respect to the second image capturing window;
a second positioning member including a support surface supporting the second portable terminal at a position of a second height closer to the second image capturing window from the second side surface, and configured to position the second portable terminal with respect to the second image capturing window.

7. The reading apparatus according to claim 6, wherein the first positioning member includes a pair of protruding units protruding by the first height from the second side surfaces at both sides sandwiching the second image capturing window, and
the pair of protruding units have, on the upper surfaces thereof, the support surfaces supporting the first portable terminal.

8. The reading apparatus according to claim 7, wherein the upper surfaces of the pair of protruding units are flat.

9. The reading apparatus according to claim 7 or 8, wherein the pair of protruding units have side surfaces at the second image capturing window,
the side surfaces of the protruding units include inclined surfaces that extend and descend from the upper surface side of the protruding unit to the second image capturing window side and that face each other over the second image capturing window, and
the second positioning member has, on the inclined surface, the support surface supporting the second portable terminal.

10. The reading apparatus according to any one of claims 7 to 9, wherein the first positioning member includes a cushion member provided on the support surface.

11. The reading apparatus according to any of claims 6 to 10, wherein the housing (11) is formed in a substantially rectangular parallelepiped shape in which the long side extends in the height direction.

12. The reading apparatus according to claim 11, wherein the first image capturing window (15) is provided on a lateral surface of the housing.

13. The reading apparatus according to claim 11 or 12, wherein the second image capturing window (18) is provided on a top surface (11a) of the housing.

14. The reading apparatus according to claim 13, wherein the top surface is inclined toward the side opposite said lateral surface on which the image capturing window is provided.
